Europäisches Patentamt

European Patent Office

Office européen des brevets

(11) Veröffentlichungsnummer: **0 264 484**
**B1**

## EUROPÄISCHE PATENTSCHRIFT

(45) Veröffentlichungstag der Patentschrift:
24.01.90

(21) Anmeldenummer: 86114742.9

(22) Anmeldetag: 23.10.86

(51) Int. Cl.⁴: **A23F 5/20**, A23F 3/36,
B01D 11/02

(54) Verfahren zum Entcoffeinieren von Naturstoffen, insbesondere Rohkaffee oder Tee.

(43) Veröffentlichungstag der Anmeldung:
27.04.88 Patentblatt 88/17

(45) Bekanntmachung des Hinweises auf die Patenterteilung:
24.01.90 Patentblatt 90/4

(84) Benannte Vertragsstaaten:
AT BE CH DE ES FR GB IT LI NL

(56) Entgegenhaltungen:
DE-A- 3 445 502
FR-A- 2 133 957
FR-A- 2 140 098

CHEM.-ING.-TECH., Band 50, Nr. 11, 1978,
Seiten 842-849, Verlag Chemie GmbH, Weinheim, DE; R.
EGGERS et al.: "Entwicklung und Projektierung von
Anlagen zur Hochdruck-Extraktion von Naturstoffen"

(73) Patentinhaber: **Kaffee-Veredelungs-Werk Koffeinfrei
Kaffee G.m.b.H. & Co., Werner Siemens Strasse 80-84,
D-2000 Hamburg 74(DE)**

(72) Erfinder: **Brunner, Gerd, Prof. Dr.-Ing., Wallersbacher
Weg 10, D-8542 Roth 3(DE)**

(74) Vertreter: **von Raffay, Vincenz, Dipl.-Ing. et al,
Patentanwälte Raffay, Fleck & Partner
Postfach 32 32 17, D-2000 Hamburg 13(DE)**

## Beschreibung

Die vorliegende Erfindung betrifft ein Verfahren zum Entcoffeinieren von Naturstoffen, insbesondere Rohkaffee oder Tee nach dem Oberbegriff des Hauptanspruches.

Ähnliche Verfahrensweisen finden sich im Stand der Technik in unterschiedlichen Ausführungsformen, so z.B. in den DE-OS 3 445 502, 3 133 032, 2 637 197 etc. Alle diese vorbekannten Verfahren weisen jedoch relativ lange Entcoffeinierungszeit auf, was ihre Wirtschaftlichkeit beeinträchtigt.

Das gleiche gilt im wesentlichen auch für die DE-A 2 119 678, die Röstkaffee betrifft, und deren Entcoffeinierungszeiten sich nicht ohne weiteres vergleichen lassen, da eine vorangehende Entölung vorgesehen wird.

Der vorliegenden Erfindung liegt deshalb die Aufgabe zugrunde, das eingangs erwähnte Verfahren derart zu verbessern, daß besonders kostengünstig mit kurzer Entcoffeinierungszeit gearbeitet werden kann.

Die vorstehende Aufgabe wird durch das im Anspruch 1 gekennzeichnete Verfahren gelöst. Danach wird erfindungsgemäß anfänglich ein hohes Gewichtsverhältnis von Lösungsmittel zu Rohkaffee bzw. Tee eingesetzt, das vorzugsweise kontinuierlich, den Erfordernissen entsprechend, reduziert wird, etwa um den Faktor 5 bis 10. Die Versuchsergebnisse haben überraschenderweise gezeigt, daß durch das erfindungsgemäße Verfahren die Extraktionsdauer etwa halbiert werden kann, ohne daß sich hierdurch der Restcoffeingehalt in irgendeiner Weise erhöht.

Weitere Vorteile und Merkmale ergeben sich aus den vorstehenden Unteransprüchen. Im folgenden wird der Verfahrensablauf im Zusammenhang mit einem erfindungsgemäßen Beispiel, dem zwei Vergleichsbeispiele gegenübergestellt sind, bei denen mit konstantem Gewichtsverhältnis von Lösungsmittel zu Naturstoff gearbeitet wird, geschildert:

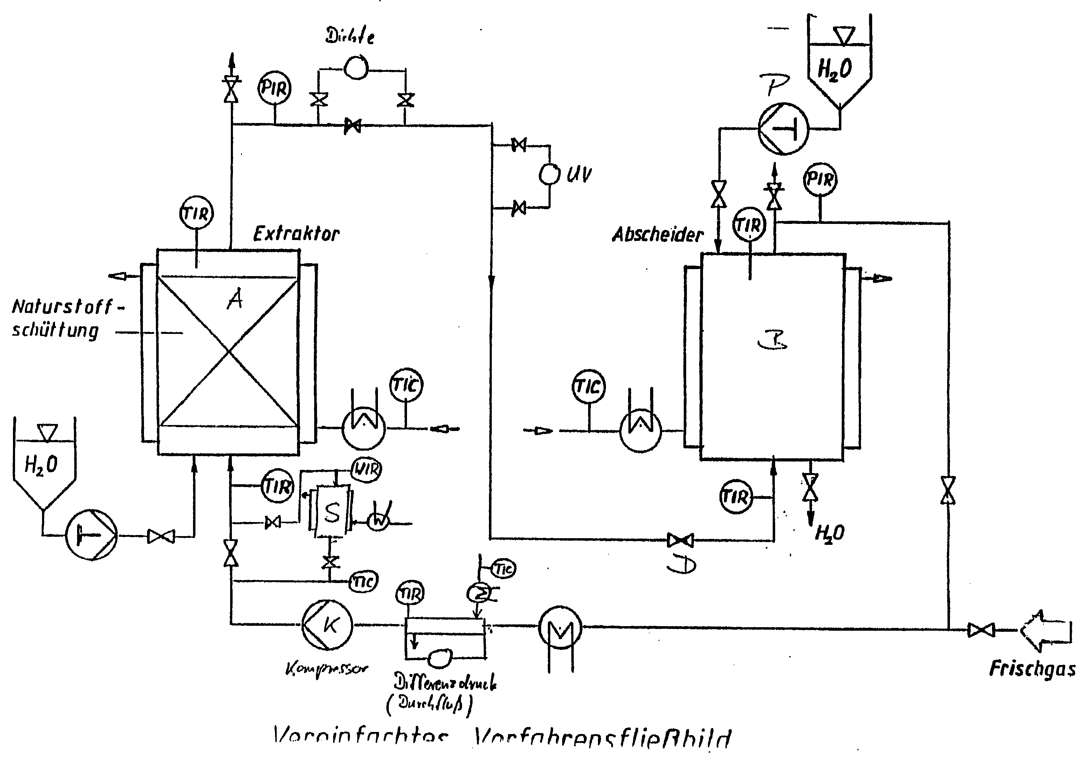

400 g Rohkaffee werden mit 40 - 160 g Wasser intensiv vermischt, bis das Wasser vollkommen von den Kaffeebohnen aufgenommen ist. Die so angefeuchtete rohkaffeemenge wird als Feststoffschüttung in den Druckbehälter A (Extraktor), der in Abb. 1 schematisch dargestellten Versuchsapparatur eingebracht. Der Druckbehälter wird verschlossen und mittels des Kompressors K durch das Extraktionsgas auf den Extraktionsdruck von 20 MPa gebracht. Als Extraktionsgas wird eine überkritische Mischung aus 30 Vol.% $CO_2$ mit 70 Vol% $N_2O$ verwendet, die aus dem Gasvorrat G gepumpt wird und nach Sättigung mit Wasser durch Durchströmen des Sättigungsbehälters S in den Extraktionsbehälter geführt wird. Als überkritische Mischung wird ein Zustand der Mischung verstanden, der hinsichtlich des Druckes höher liegt als der kritische Druck der Mischung (höher als etwa 8 MPa) und hinsichtlich der Temperatur höher liegt als die kritische Temperatur der Mischung (höher als etwa 35° C).

Nach Erreichen des Extraktionsdrucks wird der Gasumlauf am Drosselventil D geöffnet. Das Extraktionsgas strömt nunmehr von Kompressor über den Sättiger und im Extraktor durch die Schüttung roher Kaffeebohnen, aus denen selektiv das Koffein extrahiert wird. Nach Beladung mit Koffein verläßt das Extraktionsgas den Extraktionsdruckbehälter. An dem Drosselventil wird der Druck auf etwa die Hälfte des Extraktionsdrucks, ca. 10 MPa, gedrosselt. Nach der Druckerniedrigung strömt das Gas von unten in den Abscheidebehälter B. Von oben wird mittels der Pumpe P auf 60 ° C erwärmtes koffeinfreies Wasser in den auf 60 ° C erwärmten Abscheider B gepumpt, und auf eine Füllkörperschüttung gesprüht. Im Gegenstrom wird mittels des Wassers das Koffein aus dem Extraktionsgas gewaschen. Das mit Koffein beladene Wasser wird unten am Abscheider abgezogen. Das koffeinfreie Gas verläßt den Abscheider am oberen Ende und wird über den Kompressor wieder dem Extraktor zugeführt. Der Gaskreislauf wird über ca. 10 h aufrechterhalten. Dabei wird ein Verhältnis von Extraktionsgas zu eingesetzter Kaffeemenge von etwa 35 l/h aufrechterhalten.

Nach Versuchsende wird der Gaskreislauf unterbrochen und der Extraktor auf Umgebungsdruck entspannt. Die Kaffeebohnen werden in einem Umlufttrockner in etwa 1,5 h auf die Ausgangsfeuchte getrocknet.

Das Verhältnis von Extraktionsgas (Lösungsmittels) zu eingesetzter Kaffeemenge kann erfindungsgemäß reduziert werden, wodurch die für die angestrebte Entkoffeinierung benötigte Zeit verkürzt wird.

| Beispiel: | | |
|---|---|---|
| Lösungs-mittelmenge: | 1 h | 200 kg Lösungsmittel je kg trockenem Rohkaffee/h |
| danach | 2 h | 100 kg Lösungsmittel je kg trockenem Rohkaffee/h |
| danach | 4 h | 35 kg Lösungsmittel je kg trockenem Rohkaffee/h |

Versuchsergebnis: Restkoffein 0,08 Gew.-%
benötigte Lösungsmittelmenge: 540 kg/kg Kaffee

Vergleichsbeispiel 1:

Versuchsbedingungen wie im obigen Beispiel
Lösungsmittelmenge: 35,2 kg/kg k.h
Versuchsdauer: 15 h; Restkoffein 0,21 Gew.-%
Lösungsmittelmenge: 528 kg/kg Kaffee

Vergleichsbeispiel 2:

Versuchsbedingungen wie im obigen Beispiel
Lösungsmittelmenge: 70,3 kg/kg trockener Kaffee . h
Versuchdauer: 10 h; Restkoffein 0,15 Gew.-%
Lösungsmittelmenge: 703 kg/kg Kaffee.

An dieser Stelle sei angemerkt, daß sich die geschilderte Verfahrensweise ohne weiteres auf die Entcoffeinierung anderer Naturstoffe, beispielsweise Tee, übertragen läßt.

In der einzigen Figur wird ein schematisches Fließschema des erfindungsgemäßen Verfahrens gezeigt, aus dem alle Einzelheiten hervorgehen.

**Patentansprüche**

1. Verfahren zum Entcoffeinieren von Naturstoffen, insbesondere Rohkaffee oder Tee durch Behandlung desselben mit einem gasförmigen Lösungsmittel im Kreislauf, insbesondere $CO_2$ und/oder $N_2O$, im überkritischen Zustand bei einem Druck im Bereich von 150 bis 350 bar und einer Temperatur im Bereich von 40 bis 100 ° Cund Abtrennung des Coffeins vom beladenen Gas durch Herabsetzen der Temperatur und/oder des Druckes,
dadurch gekennzeichnet, daß
zunächst ein hohes Gewichtsverhältnis von Lösungsmittel zu Naturstoff eingesetzt und dieses mit voranschreitender Extraktionsdauer mindestens etwa um den Faktor 5- 10 reduziert wird.

2. Verfahren nach Anspruch 1, dadurch gekennzeichnet, daß das Lösungsmittel anfänglich im Verhältnis etwa 200 - 250 kg Lösungsmittel je kg Rohkaffee bzw. Tee pro Stunde eingesetzt wird, und daß dieses Verhältnis während der Extraktion bis zu etwa 20 kg Lösungsmittel je kg Rohkaffee pro Stunde reduziert wird.

3. Verfahren nach Anspruch 1 oder 2, dadurch gekennzeichnet, daß das gasförmige Lösungsmittel durch eine Aufschüttung des Rohkaffees bzw. Tees gepumpt wird.

4. Verfahren nach Anspruch 1 bis 3, dadurch gekennzeichnet, daß das Verhältnis von Lösungsmittel zu Rohkaffee duziert wird.

**Claims**

1. Process for the decaffeination of natural substances, particularly raw coffee or tea by treating the same with a circulating gaseous solvent, in particular $CO_2$ and/or $N_2O$, in a supercritical state at a pressure in the range 150 to 350 bar and a temperature in the range 40 to 100°C and separation of the caffeine from the charged gas by reducing the temperature and/or pressure, characterized in that initially a high weight ratio of solvent to natural substance in used and this is reduced a least approximately by the factor of 5 to 10 as the extraction time advances.

2. Process according to claim 1, characterized in that the solvent is initially used in a ratio of approximately 200 to 250 kg of solvent per kg of raw coffee or tea per hour and that this ratio is reduced during extraction to approximately 20 kg of solvent per kg of raw coffee per hour.

3. Process according to claim 1 or 2, characterized in that the gaseous solvent is pumped through a bed of raw coffee or tea.

4. Process according to claims 1 to 3, characterized in that the ratio of solvent to raw coffee or tea is continuously reduced during the extraction period.

**Revendications**

1. Procédé de décaféinage de matières naturelles, en particulier de café vert ou de thé, par traitement de ces derniers avec un dissolvant gazeux en circuit, en particulier du $CO_2$ et/ou du $NO_2$ à l'état surcritique dans une plage de pression entre 150 et 350 bar et dans une plage de température entre 40 et 100°C, et séparation de la caféine du gaz chargé au moyen d'une réduction de la température et/ou de la pression, caractérisé en ce qu'au début il est mis en œuvre un poids élevé de dissolvant par rapport à la matière naturelle et que cette proportion est réduite au cours de l'avancement de l'extraction au moins par un facteur de 5–10.

2. Procédé selon la revendication 1, caractérisé en ce que le dissolvant est mis en œuvre au début en une proportion d'environ 200–250 kg de dissolvant par kg de café vert ou de thé par heure, et que cette proportion est réduite au cours de l'extraction à un niveau d'à peu près 20 kg de dissolvant par kg de café vert par heure.

3. Procédé selon la revendication 1 ou 2, caractérisé en ce que le dissolvant gazeux est pompé au travers d'un entassement formé respectivement par le café vert et le thé.

4. Procédé selon la revendication 1 à 3, caractérisé en ce que la quantité du dissolvant par rapport au café vert ou au thé est réduite d'une façon continue au cours de la durée de l'extraction.